# DEMANDE DE BREVET EUROPEEN

(11) **EP 2 784 703 A1**
(43) Date de publication de la demande: **01.10.2014**
(21) Numéro de dépôt: 14162056.7
(22) Date de dépôt: 27.03.2014
(51) Int. Cl.: G06F 17/30

(54) **Traitement relatif à une conférence établie entre des terminaux dans un réseau de communication**

(30) Priorité: 28.03.2013 FR 1352796
(71) Demandeur: Orange, 75015 Paris (FR)
(72) Inventeur: Cazeaux, Stéphane, 14280 Authie (FR); Noisette, Yoann, 14320 May-sur-Orne (FR)

(57) **Abrégé**

L'invention se rapporte à un procédé de traitement relatif à une conférence établie entre une pluralité de terminaux (T1, T2, T3) d'un réseau de communication.

Selon l'invention, le procédé de traitement est adapté à détecter au moins une occurrence d'au moins un évènement relatif à au moins une donnée de contexte préalablement obtenue pour ladite conférence et à enregistrer au moins une information relative à ladite au moins une occurrence détectée.

L'invention se rapporte également à un dispositif de traitement (D) mettant en oeuvre le procédé de traitement.

## Description

L'invention se situe dans le domaine des télécommunications et plus particulièrement dans le domaine des services de conférences établies entre des terminaux dans un réseau de communication.

Par conférence, on entend ici tout type de communication entre des terminaux, dans lequel les terminaux se connectent à un point central, appelé pont de conférence, pour communiquer entre eux.

Parmi les différents types de conférence, on peut citer les audioconférences, les webconférences et les visioconférences.

Les services d'audioconférence permettent à au moins deux terminaux de collaborer autour d'un pont de conférence, via l'échange de flux audio convoyant la parole des utilisateurs des terminaux connectés. Une webconférence est une audioconférence permettant l'échange de documents. Les services de visioconférence convoient l'image et la parole des utilisateurs connectés et permettent également l'échange de documents.

De façon connue, l'organisation d'une telle conférence nécessite une phase préalable de réservation d'un pont de conférence lors de laquelle un utilisateur organisateur saisit des données relatives à la conférence telles que par exemple une date et un créneau horaire pour la conférence, les participants, le sujet... et obtient en retour un numéro de pont de conférence.

Les participants peuvent ensuite se connecter au pont de conférence pendant le créneau horaire réservé, au moyen d'un terminal. Les terminaux connectés peuvent ensuite communiquer entre eux via le pont de conférence. Les échanges sont des échanges effectués en temps réel. Cette étape s'appuie sur des plates-formes de service spécialisées dans l'exécution des fonctions de conférence et de traitement de flux audio et/ou vidéo.

Des services existants permettent d'obtenir un enregistrement des flux audio et/ou vidéo échangés. Un fichier de type texte correspondant aux flux audio peut également être obtenu et enregistré. Ce fichier texte est par exemple obtenu par traitement des flux audio échangés pendant la conférence par un dispositif connu de traitement automatique de la parole.

Cependant, ces enregistrements sont peu exploitables. En effet, les fichiers obtenus sont volumineux et il est difficile pour un utilisateur d'y retrouver des informations pertinentes.

Un des buts de l'invention est de remédier à des insuffisances/inconvénients de l'état de la technique et/ou d'y apporter des améliorations.

L'invention vient améliorer la situation.

A cet effet, l'invention se rapporte à un procédé de traitement relatif à une conférence établie entre une pluralité de terminaux d'un réseau de communication, caractérisé en ce qu'il comporte les étapes suivantes :
- Détection d'au moins une occurrence d'au moins un évènement relatif à au moins une donnée de contexte préalablement obtenue pour ladite conférence ;
- Enregistrement d'au moins une information relative à ladite au moins une occurrence détectée.

Des données de contexte sont obtenues pour une conférence.

L'occurrence d'évènements associés à la conférence et relatifs à une ou plusieurs de ces données de contexte est ensuite détectée.

Une information relative à une occurrence détectée est enregistrée.

Ces informations enregistrées permettent de mettre en évidence l'occurrence d'évènements associés à une conférence.

Elles peuvent être utilisées seules ou en complément d'une transcription textuelle d'un flux audio de la conférence, pour la mise en place de services.

Utilisées en complément d'une transcription textuelle d'un flux audio de la conférence, elles facilitent l'exploitation de ce fichier en permettant notamment la mise en évidence d'éléments pertinents contenus dans cette transcription textuelle.

Les données de contexte sont des données propres à la conférence. L'utilisation de données de contexte propres à une conférence permet la détection d'occurrences d'évènements représentatifs de la conférence.

Selon un mode de réalisation particulier du procédé de traitement, ladite au moins une donnée de contexte est déterminée à partir de données d'initialisation de ladite conférence obtenues lors d'une phase préalable à l'établissement de ladite conférence.

Les données d'initialisation d'une conférence sont des données caractérisant cette conférence. Elles comprennent par exemple des données permettant d'inviter des utilisateurs à la conférence, par exemple les adresses mail des participants, ainsi que des données descriptives telles que par exemple le sujet de la conférence ou l'ordre du jour prévu.

Des données de contexte sont déterminées à partir de ces données d'initialisation. Ainsi, les données de contexte sont caractéristiques de la conférence.

Les données de contexte sont extraites des données d'initialisation ou déterminées à partir de données extraites des données d'initialisation.

Selon un mode de réalisation du procédé de traitement, l'étape de détection est réalisée au cours de ladite conférence.

Ce mode de réalisation permet de détecter facilement l'occurrence d'évènements qui ne sont pas liés aux données échangées par les participants pendant la conférence, par exemple l'occurrence d'évènements tels que la connexion et la déconnexion d'un terminal.

Selon un mode de réalisation du procédé de traitement, l'étape de détection est réalisée après ladite conférence.

Ce mode de réalisation est basé sur l'analyse de flux audio et/ou vidéo de la conférence enregistrés pendant la conférence.

Il permet de mettre en oeuvre des techniques de traitement plus performantes. Par exemple, une interpolation de texte permet d'obtenir une transcription textuelle de meilleure qualité. Il permet également d'optimiser le traitement en termes de ressources (la nuit par exemple).

Selon une caractéristique particulière du procédé de traitement, un évènement est la prononciation d'un mot clé.

Un mot clé est un exemple de donnée de contexte. La détection d'occurrences relatives à des mots clé permet de retrouver facilement les informations concernant ce mot clé échangées pendant la conférence.

La détection d'un mot clé est effectuée par traitement d'un flux audio de la conférence.

La détection de mots clés permet d'identifier ces mots clés. Selon les services mis en oeuvre à partir des informations relatives aux occurrences détectées, l'identification de mots clés peut être suffisante et permet d'éviter une retranscription de phrases complètes du flux audio de la conférence.

Selon une autre caractéristique particulière du procédé de traitement, un évènement est la connexion ou la déconnexion d'un terminal.

La détection d'occurrences relatives à la connexion et à la déconnexion de terminaux permet notamment d'établir la liste des personnes présentes à tout moment de la conférence.

Selon un mode de réalisation particulier du procédé de traitement, au moins une information enregistrée comprend une estampille temporelle relative à ladite occurrence d'un évènement.

Une estampille temporelle permet de dater un évènement détecté. La datation des évènements, par rapport au début de la conférence ou dans un référentiel temporel absolu, permet d'identifier facilement une position dans le ou les flux de la conférence.

Selon un mode de réalisation particulier, le procédé de traitement comporte une étape d'obtention d'une transcription temporelle à partir d'au moins un flux audio échangé pendant ladite conférence et l'étape d'enregistrement est une étape d'insertion de ladite au moins une information dans ladite transcription.

Ce mode de réalisation permet d'obtenir un fichier texte contenant d'une part une transcription textuelle de tout ou partie des échanges audio de la conférence et d'autre part des informations sur les occurrences détectées. Grâce à l'insertion de ces informations, le fichier texte peut être facilement exploité pour mettre en place des services suite à la conférence.

Un tel service est par exemple un service proposant un résumé de la conférence contenant les phrases ou paragraphes pour lesquels une occurrence a été détectée.

Selon une caractéristique particulière du procédé de traitement, l'étape d'obtention de la transcription textuelle comporte une étape d'accès à ladite au moins une donnée de contexte.

L'utilisation de données de contexte pour obtenir une transcription textuelle à partir d'un flux audio permet d'améliorer la qualité de la transcription textuelle.

Ceci est particulièrement avantageux dans le cas où le flux audio est difficile à analyser par un logiciel de traitement de la parole, par exemple dans le cas de phrases hachées ou incomplètes dans le cas où les participants se coupent la parole ou encore dans le cas où le vocabulaire utilisé est inconnu, par exemple un vocabulaire spécifique à un métier ou à un domaine.

L'invention se rapporte également à un dispositif de traitement relatif à une conférence établie entre une pluralité de terminaux d'un réseau de communication, caractérisé en ce qu'il comporte:
- un module de détection d'au moins une occurrence d'au moins un évènement relatif à au moins une donnée de contexte préalablement obtenue pour ladite conférence ;
- un module d'enregistrement d'au moins une information relative à ladite au moins une occurrence détectée.

Selon un mode de réalisation particulier, le dispositif de traitement comporte également un module d'obtention de données de contexte de ladite conférence.

L'invention se rapporte enfin à un produit programme d'ordinateur comprenant des instructions pour mettre en oeuvre les étapes du procédé de traitement tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 est un organigramme illustrant les différentes étapes d'un procédé de traitement selon un premier mode de réalisation,
- la figure 2 est un schéma illustrant un système selon un mode de réalisation de l'invention,
- la figure 3 est un organigramme illustrant les différentes étapes d'un procédé de traitement selon un deuxième mode de réalisation,
- la figure 4 est un schéma bloc représentant un équipement mettant en oeuvre un procédé de traitement selon un mode de réalisation de l'invention.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

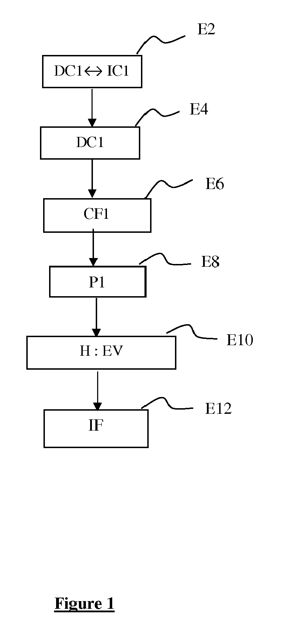

Un premier mode de réalisation d'un procédé de traitement va maintenant être décrit en référence à la **figure 1****.**

Lors d'une étape E2, des données de contexte DC1 relatives à une conférence CF1 sont définies et enregistrées.

Les données de contexte DC1 sont des données représentatives du contexte de la conférence. Elles sont définies pour la conférence considérée. Elles sont ainsi propres à la conférence CF1.

Les données de contexte sont par exemple saisies par un utilisateur et enregistrées en association avec un identifiant IC1 de la conférence CF1 lors d'une phase préalable à l'établissement de cette conférence.

Les données de contexte DC1 sont par exemple un identifiant d'un participant (un nom, un numéro de téléphone, un mail...), un sujet de conférence, une référence d'un document ou plus généralement des mots clés associés à la conférence CF1.

L'identifiant IC1 de la conférence CF1, par exemple un numéro d'accès à la conférence, est par exemple obtenu lors d'une phase de réservation de la conférence CF1.

A titre d'alternative, les données de contexte d'une conférence sont déterminées à partir des données d'initialisation de la conférence saisies par un utilisateur lors d'une phase de réservation de la conférence.

Les données d'initialisation sont des données associées à la conférence lors d'une phase préalable de réservation de la conférence. Elles comprennent par exemple des données relatives à la date et à l'heure de la conférence, un identifiant de la personne organisateur de la conférence, un objet, un ordre du jour, des mots clés, des identifiants de terminaux, les coordonnées des participants prévus, des lieux...Ces données sont propres à la conférence. Certaines de ces données peuvent par exemple être utilisées pour convoquer les participants prévus.

Une donnée de contexte est par exemple un mot, un groupe de mots, une série de chiffres... ou se présente sous la forme d'un attribut caractérisant un type de données et d'une valeur d'attribut associée.

Par exemple, un attribut est « participant » et une valeur d'attribut associée est un numéro de téléphone d'un des participants prévus.

A titre d'un autre exemple, un attribut est « mot clé » et une valeur associée est un mot clé pour la conférence.

A titre d'alternative, les données de contexte sont tout ou partie des données d'initialisation saisies lors de la phase de réservation.

Egalement, à titre d'alternative, l'ensemble des données de contexte défini pour la conférence comprend tout ou partie des données d'initialisation et des données saisies par un utilisateur.

Dans le mode de réalisation décrit, l'étape E2 est réalisée après ou pendant la phase de réservation de la conférence CF1.

Dans le mode de réalisation décrit, l'étape E2 est réalisée avant l'établissement de la conférence.

Lors d'une étape E4, les données de contexte DC1 relatives à la conférence CF1 sont obtenues.

L'étape d'obtention E4 est dans ce mode de réalisation, une étape de lecture des données de contexte DC1 enregistrées lors de l'étape E2.

A titre d'alternative, l'étape E4 d'obtention est une étape de détermination des données de contexte d'une conférence à partir des données d'initialisation d'une conférence saisies par un utilisateur lors d'une phase de réservation de la conférence.

L'étape E4 est par exemple réalisée lors de la réception d'une demande de connexion à la conférence du terminal d'un organisateur de la conférence.

Lors d'une étape E6, la conférence CF1 est établie. La conférence CF1 est par exemple considérée comme établie dès qu'un participant, le plus souvent le participant organisateur, établit une connexion avec un pont de conférence au moyen d'un identifiant de conférence obtenu lors de la phase de réservation ou suite à la phase de réservation.

Lors d'une étape E8, au moins un deuxième participant se connecte au pont de conférence. Un flux audio est alors échangé entre les terminaux connectés.

A titre d'alternative, un ou plusieurs flux vidéo sont également échangés.

Lors d'une étape E10, à un instant H, l'occurrence d'un évènement EV associé à au moins une donnée de contexte DC1 est détectée.

L'évènement EV est par exemple la connexion d'un participant, la prononciation d'un mot clé, le début ou l'arrêt du partage d'un document entre participants...

Lors d'une étape E12, une information IF relative à l'occurrence de l'évènement EV est enregistrée.

L'information IF comprend une estampille temporelle associée à l'occurrence, une information permettant d'identifier l'évènement et au moins une donnée de contexte.

L'information IF enregistrée est, par exemple « H : arrivée du participant X ». L'instant H est une estampille temporelle définie dans un repère temporel absolu. L'instant H est par exemple la date et l'heure. La donnée X est une donnée de contexte.

A titre d'alternative, l'information IF comprend une estampille temporelle relative, par exemple une estampille temporelle représentant le temps séparant l'occurrence détectée et le début de la conférence.

Egalement, à titre d'alternative, l'estampille temporelle est un pointeur permettent de repérer une position temporelle dans un flux audio et/ou dans un flux vidéo de la conférence.

Dans une variante de réalisation, les étapes d'obtention des données de contexte, de détection d'au moins une occurrence d'un évènement et d'enregistrement d'au moins une information relative à une occurrence détectée sont réalisées après la conférence.

Dans cette variante, au moins un flux audio échangé entre des terminaux connectés est enregistré pendant la conférence. Les données de contexte sont lues dans une mémoire ou déterminées, en tout ou partie, après la conférence. L'étape de détection comporte une étape d'analyse du flux audio enregistré.

Par exemple, pour un évènement qui est la prononciation d'une donnée de contexte, par exemple un mot clé, la détection de l'occurrence de l'évènement comprend l'obtention, à l'aide d'un algorithme classique de "Speech To Text", d'une transcription textuelle du flux audio enregistré et la recherche de la présence du mot clé dans la transcription textuelle.

La détection de l'occurrence d'un évènement qui est la connexion d'un participant à la conférence, par exemple la connexion du participant « John », comprend par exemple la détection d'une phrase ou d'une portion de phrase contenant le mot « bonjour » et le mot « John », prononcée pour la première fois dans le fichier audio enregistré.

A titre d'alternative, la détection de l'occurrence d'un évènement qui est la connexion d'un participant à la conférence comprend par exemple la détection du mot « bonjour » suivie d'une étape de vérification pour déterminer si le mot « bonjour » a été prononcé par un nouveau participant à la conférence. L'étape de vérification comprend par exemple une détermination de caractéristiques du locuteur à partir du flux audio correspondant au mot « bonjour » et une étape de comparaison des caractéristiques déterminées avec des caractéristiques du locuteur obtenues lors de détections précédentes d'occurrences relatives à la connexion d'autres participants.

L'information relative à une occurrence détectée comprend par exemple une estampille temporelle indiquant la position du mot ou de la phrase dans le flux audio par rapport au début dudit flux.

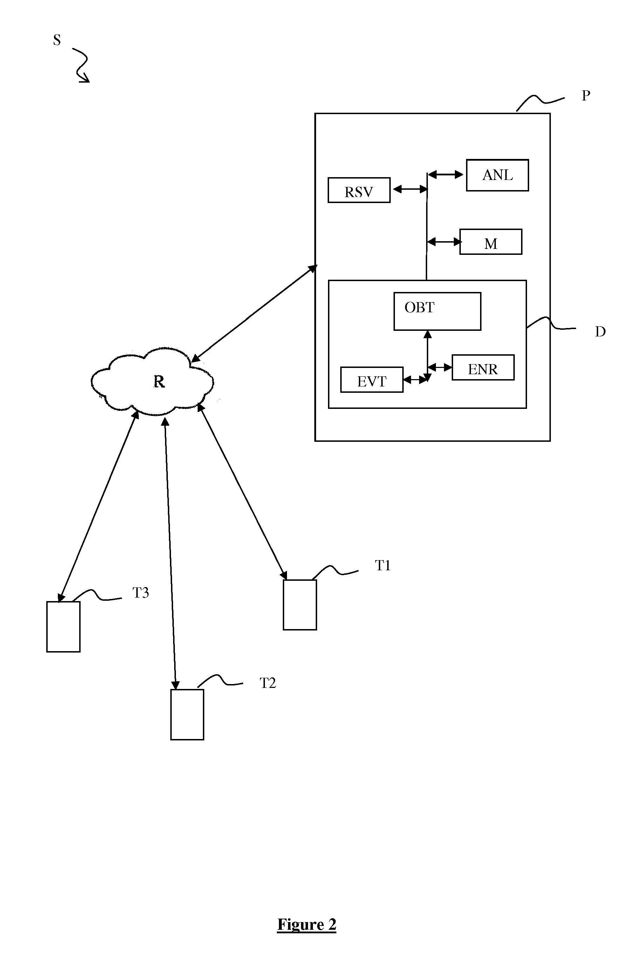

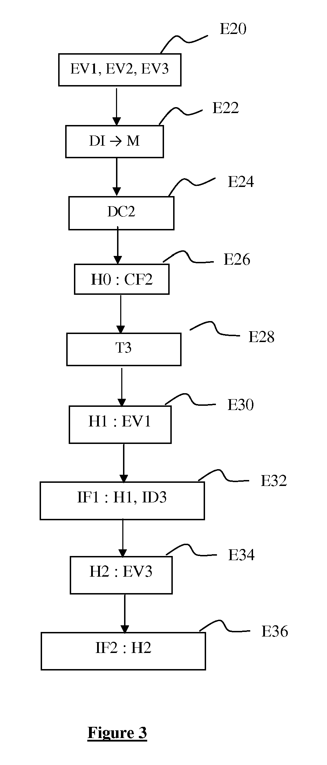

Un deuxième mode de réalisation d'un procédé de traitement va maintenant être décrit en référence aux figures 2 et 3.

La **figure 2** présente un système de conférence S. Le système de conférence S comprend une plateforme de conférence P et une pluralité de terminaux, par exemple 3 terminaux T1, T2 et T3 aptes à communiquer entre eux via un réseau de communication R.

Chaque terminal T1, T2, T3 de la pluralité de terminaux est un terminal apte à participer à une conférence.

Pour une conférence téléphonique, chaque terminal est un terminal apte à envoyer et recevoir des flux audio, par exemple un téléphone.

Pour une conférence audiovidéo, chaque terminal est un terminal apte à émettre et à recevoir des flux audiovidéos.

Cependant, un terminal audio, par exemple un téléphone, peut être connecté à une conférence audiovidéo. Dans ce cas, il ne reçoit et ne transmet que les flux audio.

Chaque terminal T1, T2, T3 de la pluralité de terminaux est un terminal d'utilisateur, par exemple un ordinateur de type PC ou un terminal mobile.

Chaque terminal de la pluralité est apte à se connecter à la plateforme de conférence P et à participer à une conférence établie pour laquelle il a reçu un identifiant de conférence.

Au moins un des terminaux, par exemple le terminal T1, est apte à établir une conférence.

Les méthodes d'établissement d'une conférence sont des méthodes connues et ne sont pas décrites dans ce document.

La plateforme de conférence P comprend un module de réservation de conférence RSV, un module d'analyse ANL et un dispositif de traitement D.

Le dispositif de traitement D comprend un module d'obtention OBT de données de contexte, un module EVT de détection d'évènement et un module ENR d'enregistrement d'informations.

Dans le mode de réalisation décrit, la plateforme de conférence P est un seul dispositif, par exemple un serveur.

A titre d'alternative, la plateforme de conférence P est par exemple constituée de plusieurs dispositifs contenant respectivement un ou plusieurs des modules ou dispositifs cités.

Un mode de réalisation d'un procédé de traitement mis en oeuvre dans le système S va maintenant être décrit en référence à la **figure 3****.**

Lors d'une étape préalable E20, un ou plusieurs évènements, par exemple trois évènements EV1, EV2 et EV3 sont définis et enregistrés dans une mémoire accessible par le dispositif de traitement D.

L'évènement EV1 est par exemple la connexion d'un terminal à une conférence.

L'évènement EV2 est par exemple la déconnexion d'un terminal.

L'évènement EV3 est par exemple la prononciation d'un mot clé.

Lors d'une étape E22, une conférence CF2 est réservée. La réservation de la conférence CF2 est par exemple effectuée au moyen d'un terminal, par exemple le terminal T1.

La réservation de la conférence CF2 comprend par exemple l'exécution d'une application web W téléchargée auprès d'un serveur, par exemple la plateforme de conférence P.

Par exemple, l'application web W permet l'affichage d'un formulaire FM sur un écran du terminal T1, la saisie de données d'initialisation DI de la conférence par un utilisateur du terminal T1, dans le formulaire FM affiché ainsi que l'envoi pour enregistrement du formulaire complété par les données d'initialisation saisies.

Les données d'initialisation DI saisies sont par exemple, un identifiant de l'utilisateur organisateur, par exemple son nom, un identifiant d'utilisateur pour chaque participant prévu, par exemple une adresse mail ou un numéro de téléphone du participant, un sujet, un ordre du jour, des mots clés ainsi qu'une date et un créneau horaire à laquelle la conférence CF2 doit avoir lieu.

Le formulaire FM transmis est reçu par un serveur, par exemple par le module de réservation RSV de la plateforme de conférence P et enregistré dans une mémoire M en association avec un identifiant de conférence IC2.

L'identifiant de conférence IC2 est attribué de façon connue, par exemple par la plateforme de conférence P.

La mémoire M est une mémoire de la plateforme de conférence P ou une mémoire accessible par la plateforme de conférence P.

Lors d'une étape E24, des données de contexte DC2 de la conférence CF2 sont obtenues par le module d'obtention OBT du dispositif de traitement D.

Les données de contexte DC2 sont déterminées à partir des données d'initialisation DI enregistrées lors de l'étape E22.

Une donnée de contexte DC2 est par exemple une donnée d'initialisation DI extraite du formulaire FM enregistré lors de l'étape E22.

Une ou plusieurs données de contexte DC2 sont par exemple obtenues par extraction d'une ou plusieurs données d'initialisation DI du formulaire FM et par interrogation d'une base de données à partir de données extraites.

Par exemple, un numéro de téléphone d'un participant est extrait du formulaire FM et une donnée de contexte, qui est par exemple une adresse mail du participant, est obtenue par envoi d'une requête comportant le numéro de téléphone extrait, à une base de données, par exemple un annuaire d'entreprise.

L'étape E24 est par exemple réalisée suite à une action de l'utilisateur organisateur pour demander l'établissement de la conférence CF2. Par exemple, l'étape E24 est déclenchée suite à la réception par la plateforme de conférence P de l'identifiant de conférence IC2.

A titre d'alternative, les données de contexte DC2 sont déterminées et enregistrées en association avec l'identifiant de conférence IC2 lors d'une phase préalable, réalisée par exemple au moment de l'enregistrement du formulaire FM et l'étape d'obtention E24 est une étape de lecture des données de contexte DC2 dans une mémoire.

Les données de contexte DC2 sont par exemple un identifiant ID1 du terminal T1, un identifiant ID2 du terminal T2, un identifiant ID3 du terminal T3 et des mots clés M1, M2.

Les mots clés sont par exemple des mots identifiés comme mots clés dans le formulaire FM.

A titre d'alternative, les mots clés sont obtenus par une analyse syntaxique du formulaire FM.

Dans le mode de réalisation décrit, chaque donnée de contexte est représentée sous la forme d'un attribut et d'une valeur associée à l'attribut.

Par exemple, un attribut est « participant » et les valeurs associées sont par exemple ID1, ID2 ou ID3

L'attribut associé aux mots clés M1 et M2 est par exemple « mot-clé ».

Lors d'une étape E26, la conférence CF2 est établie à un instant H0 entre le terminal T1 et la plateforme de conférence P.

Lors d'une étape E28, un deuxième terminal, par exemple le terminal T3, se connecte à la conférence CF2.

La conférence est alors établie entre le terminal T1, le terminal T3 et la plateforme de conférence P.

De façon connue, un signal audio et/ou vidéo transmis d'un terminal connecté à la plateforme de conférence P est retransmis aux autres terminaux connectés. Les flux émis par les terminaux connectés constituent un flux audio AV. Le flux AV peut être enregistré par la plateforme de conférence P.

A titre d'alternative, le flux AV comprend une partie audio et une partie vidéo.

La partie audio du flux AV est analysée par le module d'analyse ANL de la plateforme de conférence P. Cette analyse permet l'obtention contenant une transcription textuelle de la partie audio du flux AV. La transcription textuelle est obtenue et enregistrée, par exemple dans un fichier texte TXT au fur et à mesure du déroulement de la conférence CF2.

Le module d'analyse ANL comprend par exemple un module de traitement de la parole de type « Speech To Text ».

Le module d'analyse ANL s'appuie de façon connue sur un ou plusieurs dictionnaires de mots et /ou d'expressions.

Dans le mode de réalisation décrit, le module d'analyse ANL accède également aux données de contexte DC2 et les utilise comme des données d'un dictionnaire.

L'étape E28 est suivie d'une étape E30 lors de laquelle le module EVT de détection d'évènement détecte, à un instant H1, l'occurrence de l'évènement EV1, c'est-à-dire l'occurrence de la connexion du terminal T3.

De façon connue, la plateforme de conférence P est apte à détecter la connexion ou la déconnexion d'un terminal. Le module de détection EVT est apte à déterminer si la connexion ou la déconnexion détectée par la plateforme de conférence P est relative à un évènement prédéfini et à une donnée de contexte de la conférence considérée CF2.

Par exemple, lors de la détection d'une connexion ou d'une déconnexion d'un terminal, le module de détection EVT reçoit un numéro de téléphone associé au terminal pour lequel une connexion ou une déconnexion a été détectée. Une adresse électronique, par une adresse mail, associée au numéro de téléphone reçu est obtenue par recherche dans une base de données, par exemple dans un annuaire d'entreprise, et l'occurrence d'un évènement est détectée si l'adresse électronique obtenue est contenue dans les données de contexte DC2 de la conférence.

L'étape E30 est suivie d'une étape E32 lors de laquelle le module ENR d'enregistrement d'informations enregistre dans le fichier texte TXT une information IF1 relative à l'occurrence de l'évènement EV1. L'information IF1 est par exemple, l'heure H1 et le texte « connexion du terminal » ainsi que l'identifiant ID3 du terminal T3.

Le texte « connexion du terminal » caractérise l'évènement détecté.

L'identifiant ID3 est une donnée de contexte.

Lors d'une étape E34, au cours de la conférence, à un instant H2, le module EVT de détection d'évènement détecte l'occurrence de l'évènement EV3, c'est-à-dire la prononciation du mot clé, par exemple le mot clé M2.

Lors d'une étape E36, le module ENR d'enregistrement d'informations enregistre dans le fichier TXT une information IF2 relative à l'occurrence de l'évènement EV3.

L'information IF2 est par exemple, l'heure H2 et le mot clé M2.

A titre d'alternative, l'information IF2 contient uniquement l'heure H2 de l'occurrence et est insérée au début du paragraphe dans lequel le mot clé M2 a été détecté.

Egalement, à titre d'alternative, le mot clé M2 est surligné dans le fichier texte TXT. L'information IF2 comprend une information de mise en évidence du mot clé M2. Dans ce cas, l'information IF2 ne comprend pas d'estampille temporelle explicite.

Les étapes de détection d'occurrences d'évènement et d'enregistrement d'informations relatives aux occurrences détectées sont réitérées pendant la conférence CF2.

A la fin de la conférence CF2, le fichier texte TXT obtenu est un fichier contenant une traduction sous forme de texte des échanges audio réalisés pendant la conférence CF2 et dans lequel des informations relatives à chaque occurrence détectée ont été insérées.

A titre d'alternative, les informations relatives aux évènements détectés sont enregistrées dans une mémoire, par exemple sous la forme d'un fichier.

Le fichier texte TXT ou le fichier contenant les évènements détectés peut ensuite être utilisé pour mettre en oeuvre des services relatifs à la conférence CF2.

Un premier exemple de service est l'établissement d'un compte rendu de la conférence CF2. Le compte-rendu contient par exemple, les paragraphes ou phrases pour lesquels des mots clés ont été détectés.

Un deuxième exemple de service est un chapitrage du contenu de la conférence en fonction de tout ou partie des données de contexte de la conférence, par exemple en fonction des sujets, de mots clés ou des participants.

Par exemple, un chapitrage pour un mot clé «point d'action » comprend l'extraction des informations relatives aux occurrences détectées pour le mot clé « point d'action » dans un fichier dans lequel sont enregistrées les informations relatives aux occurrences détectées pour la conférence considérée.

Les informations extraites sont ensuite affichées sous forme d'une interface graphique sur un écran d'un terminal d'un utilisateur. La sélection par un utilisateur d'une des informations affichées déclenche la restitution du contenu audio et/ou vidéo de la conférence à partir d'un instant associé à l'information sélectionnée.

Selon un mode de réalisation particulier, le procédé comporte deux phases. Lors d'une première phase, les étapes de détection d'occurrences d'évènements relatifs à au moins une données de contexte obtenue pour la conférence et d'enregistrement d'informations relatives aux occurrences d'évènements sont réalisées au cours de la conférence, c'est-à-dire en temps réel. Lors d'une deuxième phase réalisée après la conférence, c'est-à-dire en temps différé, les données de contexte sont utilisées pour améliorer une transcription textuelle obtenue à partir d'un flux audio de la conférence.

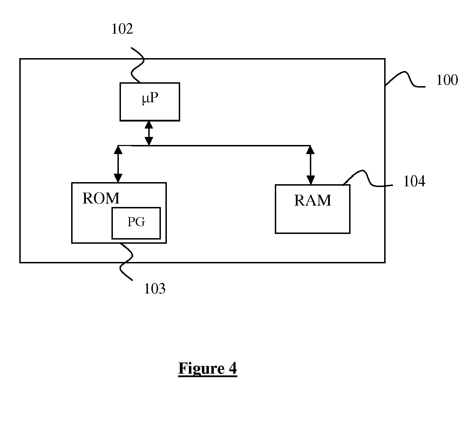

Selon un mode de réalisation choisi et représenté à la figure 4, un dispositif de traitement mettant en oeuvre un procédé traitement selon l'invention est par exemple un ordinateur 100 qui comporte de façon connue, notamment une unité de traitement 102 équipée d'un microprocesseur, une mémoire morte de type ROM ou EEPROM 103, une mémoire vive de type RAM 104.

Le dispositif de traitement 100 peut comporter de manière classique et non exhaustive les éléments suivants: un écran, un microphone, un haut-parleur, un moyen de stockage...

La mémoire morte 103 comporte des registres mémorisant un programme d'ordinateur PG comportant des instructions de programme adaptées à réaliser les étapes d'un procédé de traitement relatif à une conférence établie entre une pluralité de terminaux d'un réseau de communication.

Lors de la mise sous tension, le programme PG stocké dans la mémoire de type EEPROM 103 est transféré dans la mémoire vive qui contiendra alors un code exécutable ainsi que des registres pour détecter au moins une occurrence d'au moins un évènement relatif à au moins une donnée de contexte préalablement obtenue pour ladite conférence, et pour enregistrer au moins une information relative à ladite au moins une occurrence détectée.

De manière plus générale un moyen de stockage, lisible par un ordinateur ou par un microprocesseur, intégré ou non au dispositif, éventuellement amovible, mémorise un programme mettant en oeuvre les étapes d'un procédé de traitement relatif à une conférence selon l'invention.

## Revendications

1. Procédé de traitement relatif à une conférence (CF1, CF2) établie entre une pluralité de terminaux (Tl, T2, T3) d'un réseau de communication (R), **caractérisé en ce qu'**il comporte les étapes suivantes :
- détection (E10, E30, E34) d'au moins une occurrence d'au moins un évènement (EVT, EV1, EV3) relatif à au moins une donnée de contexte (DC1, DC2) déterminée à partir de données d'initialisation obtenues lors d'une phase préalable de réservation de ladite conférence ;
- enregistrement (E12, E32, E36) d'au moins une information (IF, IF1, IF2) relative à ladite au moins une occurrence détectée.

2. Procédé de traitement selon la revendication 1 dans lequel l'étape de détection est réalisée au cours de ladite conférence.

3. Procédé de traitement selon la revendication 1 dans lequel un évènement est la prononciation d'un mot clé.

4. Procédé de de traitement selon la revendication 1 dans lequel un évènement est la connexion ou la déconnexion d'un terminal.

5. Procédé de de traitement selon la revendication 1 dans lequel au moins une information enregistrée comprend une estampille temporelle relative à ladite occurrence d'un évènement.

6. Procédé de traitement selon la revendication 1 dans lequel le procédé comporte une étape d'obtention d'une transcription textuelle d'au moins un flux audio échangé pendant ladite conférence et dans lequel l'étape d'enregistrement est une étape d'insertion de ladite au moins une information dans ladite transcription.

7. Procédé de traitement selon la revendication 6 dans lequel l'étape d'obtention de la transcription textuelle comporte une étape d'accès à ladite au moins une donnée de contexte.

8. Dispositif de traitement (D) relatif à une conférence (CF1, CF2) établie entre une pluralité de terminaux (Tl, T2, T3) d'un réseau de communication (R), **caractérisé en ce qu'**il comporte:
- un module de détection (EVT) d'au moins une occurrence d'au moins un évènement relatif à au moins une donnée de contexte (DC1, DC2) déterminée à partir de données d'initialisation obtenues lors d'une phase préalable de réservation de ladite conférence ;
- un module d'enregistrement (ENR) d'au moins une information relative à ladite au moins une occurrence détectée.

9. Dispositif de traitement selon la revendication 8 **caractérisé en ce qu'**il comporte un module d'obtention (OBT) de données de contexte de ladite conférence.

10. Produit programme d'ordinateur comprenant des instructions pour mettre en oeuvre les étapes du procédé de traitement selon l'une des revendications 1 à 7, lorsqu'il est chargé et exécuté par un processeur.
